# FASCICULE DE BREVET EUROPEEN

(11) **EP 3 395 437 B1**
(45) Date de publication et mention de la délivrance du brevet: **13.05.2020**
(21) Numéro de dépôt: 18175644.6
(22) Date de dépôt: 15.05.2008
(51) Int. Cl.: B01J 19/12, C01B 33/029, C09K 11/59, B82B 1/00, B82B 3/00

(54) **SYNTHESE PAR PYROLYSE LASER DE NANOCRISTAUX DE SILICIUM**
LASERPYROLYSE-SYNTHESE VON SILIZIUM-NANOKRISTALLEN
SYNTHESIS OF SILICON NANOCRYSTALS BY LASER PYROLYSIS

(30) Priorité: 18.05.2007 FR 0703563
(43) Date de publication de la demande: 31.10.2018
(62) Demande divisionnaire de: 08805785.6
(73) Titulaire: COMMISSARIAT A L'ENERGIE ATOMIQUE, 75015 Paris (FR)
(72) Inventeur: HERLIN-BOIME, Nathalie, 91400 ORSAY (FR); SUBLEMONTIER, Olivier, 92260 FONTENAY-AUX-ROSES (FR); LACOUR, Frédéric, 94110 ARCUEIL (FR)
(74) Mandataire: Plasseraud IP

(56) Documents cités:
- WO-A-2006/051233
- JP-A- 5 200 266
- US-A- 5 562 771
- US-A1- 2002 075 126
- US-A1- 2004 229 447

## Description

### Domaine technique

La présente invention concerne la synthèse de nanoparticules comportant du silicium sous forme cristalline.

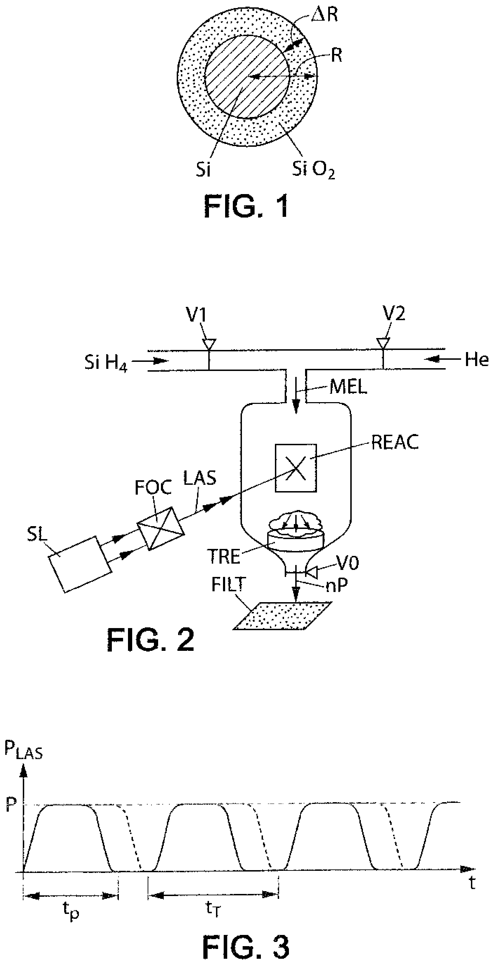

En référence à la figure 1, une nanoparticule de silicium cristallin Si comporte naturellement, en surface, une couche d'oxyde SiO₂ dont l'épaisseur ΔR représente environ un dixième du diamètre global D de la nanoparticule. Par confinement quantique, de telles nanoparticules, comportant un cœur de silicium cristallin dont la taille est inférieure ou de l'ordre de 10 nanomètres, présentent des propriétés de photoluminescence. La longueur d'onde d'émission de photons par l'effet de photoluminescence est d'autant plus courte que la taille du cœur cristallin des nanoparticules est petite (de 10 nm pour du rouge/infrarouge à 3 nm pour du rouge/jaune). Par ailleurs, il est possible aussi de modifier les longueurs d'onde d'émission, notamment, en modifiant la composition des nanoparticules. On indique par exemple que des nanoparticules incluant du carbone (Si-C) et/ou du germanium (Si-Ge) et/ou de l'azote (Si-N) peuvent aussi avoir des propriétés de photoluminescence.

Ainsi, le silicium, sous forme de poudre de nano-grains cristallins, est photoluminescent. Cette propriété, observable à température ambiante et dans le domaine visible (du vert au rouge suivant la taille des grains), peut ouvrir la voie à des applications dans des domaines très divers tels que la photonique (lasers silicium), la biologie (marqueurs ou traceurs), la détection de contrefaçon (code barre optique), la cosmétique, ou autres.

La photoluminescence attribuée au phénomène de confinement quantique est observée lorsque la structuration du silicium est réduite à l'échelle nanométrique (taille inférieure à 10 nm) et la couleur observée varie en fonction de la taille des nanocristaux. On comprend donc l'intérêt croissant pour la production de nanocristaux de silicium de taille aussi faible que possible. Toutefois, le développement de dispositifs basés sur de telles nanoparticules a été freiné par leur manque de disponibilité.

### Etat de l'art

Plusieurs approches ont été développées pour obtenir ces matériaux. On peut citer par exemple plusieurs techniques conduisant à des couches minces contenant du Si telles que l'implantation de Si dans une matrice SiO₂ suivie d'un recuit qui a pour effet de faire précipiter des nanocristaux de silicium. On peut citer aussi le dépôt chimique en phase vapeur assisté par plasma (ou PECVD pour « *Plasma Enhanced Chemical Vapor Déposition* »). En outre, des approches en phase liquide telles que la synthèse dite en « micelles inverses », ou encore des solutions supercritiques, sont souvent longues à mettre en œuvre et ont des rendements faibles.

En ce qui concerne les procédés de synthèse physique permettant d'obtenir des nanoparticules libres, on peut noter l'ablation laser, la pyrolyse thermique dans un réacteur en flux, la synthèse par plasma ou la pyrolyse par un laser (suffisamment puissant comme par exemple un laser CO₂). Seules ces deux dernières techniques ont donné des résultats intéressants en ce qui concerne la production et la qualité des nanoparticules obtenues.

Selon une première technique, des nanoparticules de silicium dans la gamme de taille de 2 à 8 nm ont été obtenues dans un plasma radiofréquence d'argon-silane à basse pression (186 à 1860 Pa) par le procédé décrit dans :
"High yield plasma synthesis of luminescent silicon nanocrystals", L. Mangolini, E. Thimsen, U. Korsthagen, Nanoletters, vol. 5-4, p. 655-659 (2005).
Des flux de silane dans la gamme 0,4 à 2,4 sccm (unité dite « *standard cubic centimeter per minute* ») permettent des productions allant de 14 à 52 mg par heure. Les nanoparticules présentent une distribution de taille assez resserrée (par exemple 5,72 nm avec une déviation standard de 0,68 nm). Après un traitement dit de « passivation » visant à rendre inerte la surface des nanoparticules, ces dernières présentent une photoluminescence dont la longueur d'onde de pic est comprise entre 700 et 840 nm selon les nanoparticules.

Une seconde technique est la pyrolyse de silane par un laser, notamment à l'aide d'un laser pulsé à base de CO₂, selon le procédé décrit dans :
*"*Photoluminescence properties of silicon nanocrystals as a function of their size", G. Ledoux, O. Guillois, D. Porterat, C. Reynaud, F. Huisken, B. Kohn, V. Paillard, Phys. Rev. B, vol.62(23) p. 15942-51 (2000).
Il convient de rappeler que cette technique consiste à exposer un flux de silane à un faisceau laser pour élever sa température jusqu'à obtenir une flamme de pyrolyse et pour collecter des nanoparticules de silicium qui se sont formées dans la flamme.
Les nanoparticules obtenues sont dans une gamme de taille comprise entre 2,8 et 4,8 nm et émettent une photoluminescence intense dans une gamme de longueurs d'onde de 610-900 nm après simple passivation à l'air. Toutefois, les très faibles quantités obtenues (quelques milligrammes seulement) semblent incompatibles avec des applications industrielles.

Plus récemment, il a été montré qu'il était possible de produire des nanoparticules de silicium dans la gamme de taille 5-20 nm par pyrolyse laser de silane à une pression de 54 10³ Pa, et ce, à l'aide d'un laser continu de faible puissance (60 W), mais focalisé (avec un diamètre de la tache focale de 2 mm), dans le document :
*"*Process for Preparing Macroscopic Quantities of Brightly Photoluminescent Silicon Nanoparticles with Emission Spanning the Visible Spectrum", X Li, Y He, S. Talukdar, M. Swihart, Langmuir 19, p. 8490-8496 (2003).
Le taux de production se situe dans la gamme de 20-200 mg/heure. Cependant, après la synthèse, une deuxième étape (ici un traitement chimique par un composé HF/HNO₃) est nécessaire pour rendre les particules photoluminescentes. La photoluminescence peut alors être observée ensuite dans la gamme de longueurs d'onde 500-800 nm.

Dans ce même document, il est indiqué qu'une production serait plus élevée en utilisant un laser de plus forte puissance et en augmentant la taille de la zone de recouvrement laser/précurseur. Toutefois, il n'est donné aucun détail sur l'effet de ces paramètres sur les tailles de particules. On s'attend néanmoins à une augmentation de la taille des cristaux, une augmentation de la puissance laser conduisant *a priori* à une augmentation de la température de flamme et donc, en général, à une meilleure cristallisation. En outre, une augmentation de la zone de recouvrement conduirait elle aussi à une augmentation du temps d'interaction et donc de la taille des cristaux obtenus.

Des nanoparticules de silicium d'une taille pouvant descendre jusqu'à une douzaine de nm ont été obtenues par pyrolyse laser, en utilisant un laser continu de forte puissance, comme décrit dans : "Laser-grown silicon nanoparticles and photoluminescence properties", N. Herlin-Boime, K. Jursikova, E. Trave, E. Borsella, O. Guillois, J. Vicens, C. Reynaud, Proceedings MRS spring meeting, symposium M, San-Francisco, USA (2004).

Les productions obtenues sont de plusieurs grammes par heure. Du fait de leur taille, ces nanoparticules ne présentent pas de photoluminescence. Seule une étape de traitement thermique sous air (de manière à forcer l'oxydation) a permis de réduire la taille du cœur de silicium en-dessous de 10 nm et obtenir alors l'effet de photoluminescence.

Par ailleurs, le document US 2002/075126 A1 décrit une installation de synthèse par pyrolyse laser de nanoparticules d'oxyde de zinc comportant des régulateurs de débit massique permettant de contrôler le débit des gaz.

Ainsi, concernant la pyrolyse laser, il n'existe pas, actuellement, de solution permettant d'obtenir, en quantité pondérable et en une seule étape, des nanoparticules de silicium de taille inférieure ou égale à 10 nm et présentant des propriétés de photoluminescence, par exemple après simple passivation à l'air.

La présente invention vient améliorer la situation.

### Présentation de l'invention

Elle propose à cet effet une installation de synthèse par pyrolyse laser de nanoparticules comportant du silicium, dans laquelle un précurseur comportant l'élément silicium est acheminé par un fluide de transport vers un réacteur de pyrolyse pour recevoir un rayonnement laser. L'installation comporte :
- une source laser réglable au moins en puissance,
- un jeu de vannes pour contrôler la dilution du précurseur dans le fluide de transport, et
- des moyens adaptés pour :
   - acheminer, par le fluide de transport, le précurseur comportant l'élément silicium, vers le réacteur de pyrolyse,
   - appliquer, dans le réacteur, un rayonnement laser à un mélange que forment le fluide de transport et le précurseur,
   - récupérer en sortie du réacteur des nanoparticules comportant du silicium.

Selon l'invention, la source laser, en plus d'être réglable en puissance, est en outre réglable en durée d'impulsion effective dans une période de tir laser. De façon avantageuse, pour :
- une puissance typiquement supérieure ou de l'ordre de 500 watts, et
- une durée d'impulsion supérieure ou de l'ordre de 40% d'une période de tir laser,

Avantageusement, la puissance du rayonnement laser est comprise entre environ 500 watts et environ 2400 watts.

On obtient, à une cadence supérieure ou de l'ordre de 80 milligrammes par heure, des nanoparticules présentant un cœur sous forme cristalline de taille inférieure ou de l'ordre de 10 nanomètres.

Selon les essais réalisés, il a été observé en effet qu'un paramètre important pour obtenir une quantité pondérable de nanoparticules photoluminescentes était l'apport en énergie photonique à la réaction de pyrolyse, et ce, avant même la quantité de précurseur ou sa vitesse de passage dans le réacteur de pyrolyse. Par exemple, malgré une augmentation de la vitesse de passage du précurseur dans le réacteur de pyrolyse (et donc une diminution du temps laissé à la réaction de pyrolyse), il a été observé que la cadence de production pouvait néanmoins croître en particulier en fonction de l'énergie apportée par le rayonnement laser, soit sous la forme de puissance laser, soit sous la forme de durée d'impulsion effective émise.

La présente invention propose pour la première fois une augmentation substantielle de la cadence de production tout en contrôlant finement la taille des nanoparticules obtenues, et ce, en jouant notamment sur la puissance laser et sur le pourcentage de durée d'impulsion efficace, ce qui a permis, comme on le verra dans les exemples de réalisation donnés plus loin, d'atteindre des cadences de production record, supérieures à 700 milligrammes par heure en obtenant des tailles de nanoparticules qui restent néanmoins inférieures à 10 nm.

Par ailleurs, il est avantageux de contrôler la dilution du précurseur comportant l'élément silicium dans le fluide de transport. En effet, il convient de contrôler le nombre de collisions entre atomes de silicium, de manière à limiter la taille des nanoparticules. Par ailleurs mais en moindre influence, le fait de diluer le précurseur permet d'augmenter le débit de flux de transport et, de là, la vitesse de passage dans le réacteur. On limite ainsi le temps de réaction et, par conséquent, la croissance des particules.

D'après les essais réalisés, le fait d'augmenter l'apport en énergie photonique (puissance et durée d'impulsion effective) permet d'augmenter la cadence de production. Toutefois, l'augmentation de la cadence de production s'accompagne très souvent d'une augmentation de la taille des particules obtenues. La dilution peut alors être un paramètre supplémentaire pour limiter l'augmentation de la taille des particules et le contrôle des trois paramètres puissance laser, pourcentage de durée d'impulsion efficace et dilution, permet d'assurer un contrôle fin de la taille des particules obtenues tout en les produisant en quantité pondérable. Typiquement, pour un précurseur comportant un atome de silicium par molécule, une dilution comprise entre 1/10 et 1/30 dans le fluide de transport a fourni de bons résultats avec une puissance laser supérieure à 500W et un pourcentage de durée d'impulsion efficace de 40%. Bien entendu, le fluide de transport est préférentiellement un gaz neutre, tel que de l'hélium par exemple. Le précurseur peut être acheminé aussi sous forme gazeuse dans le réacteur. Il peut typiquement s'agir du silane de formule SiH₄.

Selon un mode de réalisation, l'installation comporte en outre des moyens de focalisation du rayonnement laser sur le réacteur adaptés pour focaliser le rayonnement laser sur une tâche de quelques millimètres de diamètre dans le réacteur, avec par exemple une tache de focalisation de 2 millimètres de diamètre. En effet, il est avantageux de contrôler aussi la focalisation du faisceau laser dans le réacteur pour s'assurer que la puissance laser de consigne (*i.e.* celle qu'il est souhaitable d'imposer) est efficacement transmise dans le réacteur et, dans une moindre influence selon les essais réalisés, pour créer une zone géométrique d'interaction laser/précurseur de faibles dimensions et faire ainsi en sorte que le temps de croissance des particules dans la zone de réaction soit limité.

Avantageusement, les moyens de focalisation permettent une focalisation du rayonnement laser sur une tâche, et en ce qu'ils sont adaptés pour contrôler en hauteur et/ou en largeur les dimensions de la tâche.

Selon un mode de réalisation, l'installation comporte en outre un jeu de vannes pour contrôler la vitesse d'injection dans le réacteur pour opérer dans une gamme de vitesse d'injection dans le réacteur comprise entre environ 4 à environ 11 mètres par seconde. En effet, un autre moyen de limiter le temps d'interaction laser/précurseur peut être simplement, comme indiqué plus haut, le contrôle du débit de fluide de transport pour que la vitesse d'injection dans le réacteur soit dans la gamme donnée ci-avant de 4 à 11 mètres par seconde. La vitesse d'injection permet de contrôler indirectement la vitesse de passage dans la zone de réaction. Pour simplifier l'exposé ci-après, on désignera communément par les mêmes termes « vitesse de passage » ces deux vitesses.

Selon un mode de réalisation, le fluide de transport, au moins, est sous forme gazeuse dans le réacteur, et l'installation comporte en outre au moins un manomètre de contrôle de la pression du fluide de transport, au moins, pour opérer à basse pression dans le réacteur. Un autre paramètre qu'il peut être avantageux de contrôler est en effet la pression du mélange que forment le précurseur et le fluide de transport dans le réacteur. Préférentiellement, cette pression est basse (inférieure à la pression atmosphérique), ce qui a pour effet de limiter la nucléation et les collisions conduisant à la croissance des particules.

Dans l'exemple de réalisation où le précurseur est un gaz tel que du silane transporté dans un gaz neutre (par exemple de l'hélium), l'au moins un manomètre de contrôle de pression du fluide de transport est avantageusement adapté pour que la pression dans le réacteur soit comprise entre environ 5,3x10³ Pa (ou 40 torr) et environ 4,00 x 10⁴ Pa (ou 300 torr) et avantageusement, entre 2,00 x 10⁴ Pa (ou 150 torr) et 4,00 x 10⁴ Pa (ou 300 torr). Toutefois, il n'est pas exclu, dans une variante de réalisation, que le précurseur soit acheminé dans le réacteur sous une forme autre que gazeuse (par exemple sous forme de gouttelettes) et, dans ce cas, on contrôle alors la pression au moins du fluide de transport qui, lui, reste préférentiellement sous forme gazeuse.

Selon un mode de réalisation, l'installation comporte en outre un système de trempe par injection de gaz à froid après la pyrolyse pour appliquer une trempe des nanoparticules par un gaz froid après la pyrolyse. L'application d'une trempe à froid aux particules en sortie du réacteur permet de bloquer la croissance des particules après la réaction de pyrolyse.

Selon un mode de réalisation, la source laser est contrôlable en outre en fréquence de tirs laser.

D'autres caractéristiques et avantages de l'invention apparaîtront à l'examen de la description détaillée ci-après, et des dessins annexés sur lesquels, outre la figure 1 décrite ci-avant :
- la figure 2 illustre schématiquement un dispositif pour la mise en œuvre du procédé de pyrolyse au sens de l'invention,
- la figure 3 illustre les durées d'impulsion effective au cours de tirs lasers à fréquence constante,
- la figure 4 illustre l'effet de la durée d'impulsion effective sur la taille des nanoparticules,
- la figure 5 montre les spectres de photoluminescence enregistrés sur des nanoparticules obtenues par la mise en œuvre du procédé, pour illustrer une faible dispersion en taille de ces nanoparticules,
- la figure 6 illustre une variation de la production horaire de nanoparticules en fonction du pourcentage de durée d'impulsion efficace par tir laser,
- la figure 7A illustre un dispositif de focalisation permettant le contrôle de la tache du laser,
- la figure 7B illustre un dispositif de focalisation comportant une lentille cylindrique,
- la figure 7C illustre un dispositif de focalisation comportant deux lentilles, et
- la figure 8 illustre différentes formes de taches pour un même écoulement de mélange.

### Exemple d'un dispositif de pyrolyse

En référence à la figure 2, un précurseur comportant l'élément silicium, sous forme gazeuse, et plus précisément du silane SiH₄ dans l'exemple de réalisation décrit, est mélangé à un gaz neutre, ici de l'hélium He en tant que fluide de transport. Préférentiellement, la dilution du précurseur dans le fluide de transport est comprise entre 1/10 et 1/30. Dans l'exemple décrit, la dilution est contrôlée par les deux vannes V1 et V2 de la figure 2. Le mélange des deux gaz, référencé MEL sur la figure 2, est acheminé vers une chambre de réaction REAC, à une pression contrôlée par un manomètre V0. La pression du mélange est préférentiellement comprise entre 2,00 x 10⁴ Pa (ou 150 torr) et 4,00 x 10⁴ Pa (ou 300 torr). Un système régulateur de débit massique comportant les vannes V1 et en particulier V2 permet de contrôler aussi le débit de gaz et en particulier du flux de transport (flèche He) dans la chambre de réaction REAC. Le débit de fluide de transport est compris ici entre 600 et 2000 sccm, ce qui correspond, dans les conditions expérimentales des essais réalisés et décrits ci-après, à une vitesse de passage dans le réacteur REAC comprise entre environ 4 et 11 mètres par seconde.

Au sens de l'invention, il est choisi d'utiliser un laser SL pouvant fonctionner à haute puissance, en mode continu ou en mode pulsé avec alors des durées d'impulsion beaucoup plus longues que celles préconisées dans l'état de l'art (avec un pourcentage de durée d'impulsion efficace par période de tir laser supérieur ou de l'ordre de 40%). Il peut s'agir par exemple d'une source laser CO₂ pouvant délivrer jusqu'à 5 kW en mode continu. On a représenté schématiquement sur la figure 3 l'allure des impulsions efficaces des tirs lasers. Ces tirs sont périodiques. La durée totale d'un tir (ou « période de tir ») est référencée t_{T} tandis que la durée des impulsions efficaces est référencée tₚ. La puissance laser de consigne P_{LAS} est atteinte en chaque maximum P d'impulsion efficace. La source laser SL du dispositif de pyrolyse au sens de l'invention est alors réglable à la fois en puissance de consigne, en période de tir (ou, de façon équivalente, en fréquence de tirs laser) et en pourcentage de durée d'impulsion efficace tₚ par période de tir t_{T}. On prévoit en outre des moyens de focalisation FOC du faisceau émis par la source laser SL pour focaliser le faisceau laser LAS incident sur le réacteur REAC de manière à ce que l'impact du faisceau LAS ainsi focalisé sur la zone de réaction de pyrolyse forme une tache de 2 millimètres environ, ce qui correspond à un temps de réaction compris entre environ 0,18 et 0,5 milliseconde (pour une vitesse de passage dans le réacteur comprise entre 4 et 11 mètres par seconde).

Il est possible d'améliorer encore le procédé de synthèse en traitant les particules obtenues immédiatement en sortie de la flamme de pyrolyse par un effet de trempe.

Pour ce faire, on réalise une injection d'un gaz froid TRE après la zone d'interaction précurseur/laser, de manière à bloquer la croissance des particules. Ainsi, en visant une même taille de particule, il est possible d'augmenter la cadence de production en mettant en œuvre cette trempe à froid. Ce système de trempe TRE est de géométrie annulaire, similaire aux systèmes de trempe qui peuvent être utilisés sur les torches à plasma mais, à la connaissance des inventeurs, un tel système n'a encore jamais été utilisé dans un dispositif de pyrolyse laser.

Les nanoparticules obtenues nP sont finalement recueillies sur un filtre FILT. Elles présentent généralement des tailles assez homogènes. Selon les conditions expérimentales, la taille peut être comprise entre environ 4 et 10 nanomètres. Les particules obtenues deviennent photoluminescentes après oxydation naturelle dans l'atmosphère (typiquement après quelques mois, voire moins pour des particules de petite taille).

### Plages de valeurs et influence des paramètres expérimentaux

Il convient de préciser déjà que la cadence de production et la taille des particules obtenues varient dans le même sens et de façon quasi-indissociée. En d'autres termes, si l'on cherche à augmenter la cadence de production, on obtient nécessairement des particules dont la taille peut dépasser les 10 nanomètres, ce qui nécessite ensuite un traitement chimique ou thermique pour rendre les particules photoluminescentes.

Ainsi, avec la synthèse par laser en émission continue mais à faible puissance, au sens de l'art antérieur, les particules obtenues sont de grande taille et une étape supplémentaire de traitement chimique est nécessaire pour obtenir la photoluminescence. Avec un laser pulsé, les quantités produites sont, en revanche, extrêmement faibles.

Plus précisément, avec un laser continu, le temps de réaction est uniquement fonction de la vitesse de passage des réactifs (donc de leur débit) et de la taille de la tache laser. Le temps d'interaction gaz/laser peut être typiquement de l'ordre de 0,1 à 1 milliseconde dans l'art antérieur, notamment dans le document cité ci-avant :
"Laser-grown silicon nanoparticles and photoluminescence properties", N. Herlin-Boime, K. Jursikova, E. Trave, E. Borsella, O. Guillois, J. Vicens, C. Reynaud, Proceedings MRS spring meeting, symposium M, San-Francisco, USA (2004).

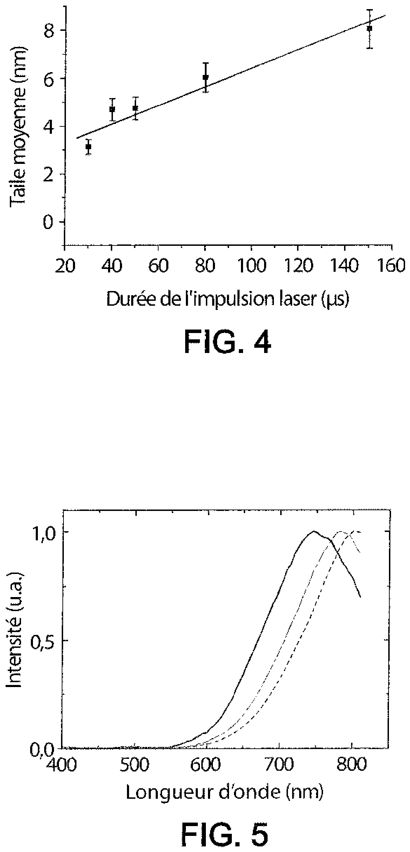

Avec un laser pulsé, le temps de réaction est aussi fonction de la durée d'une impulsion laser efficace (comme le montre la figure 4 décrite ci-après) et le fait de contrôler, au sens de l'invention, ce paramètre permet aussi de mieux contrôler la taille des particules obtenues, tout en les produisant en quantité pondérable.

On a représenté sur la figure 4 une variation de la taille des particules obtenues en fonction de la durée des impulsions efficaces émises, les autres paramètres tels que le pourcentage de durée d'impulsion efficace par période de tir, la puissance laser, la dilution, la pression, etc., étant constants par ailleurs. Les mesures de taille sont faites in situ par spectrométrie de masse à temps de vol sur des nanoparticules extraites de la flamme par un pompage différentiel et un jet supersonique.

Il apparait que, déjà pour une durée d'impulsion efficace de 30 microsecondes seulement, des nanoparticules se créent. Il convient de noter qu'en-dessous de cette durée, il pourrait ne pas se créer du tout de flamme de pyrolyse. Dans la gamme exposée, on observe surtout que la taille des nanoparticules et donc la cadence de production augmentent bien en fonction de la durée d'impulsion efficace, ce qui confirme l'importance de la durée d'impulsion effective.

Une gamme de durées d'impulsion effective qui a fourni de bon résultat va d'environ 30 microsecondes à environ 260 microsecondes. Un fonctionnement du laser en continu a fourni aussi de bons résultats mais à puissance plus faible.

D'ailleurs, intuitivement, le temps d'interaction (à travers la durée des impulsions), ainsi que la température de réaction (à travers la puissance ou l'énergie du faisceau laser par unité de surface), sont plutôt des paramètres de nature à favoriser la croissance des cristaux. Pourtant, la taille des cristaux obtenus reste inférieure à une dizaine de nanomètres et c'est, en revanche, la cadence de production des nanoparticules qui est fortement accrue, pouvant atteindre des valeurs record dépassant les 700 milligrammes par heure. De tels résultats ont été obtenus en contrôlant en particulier le pourcentage de durée d'impulsion effective par période de tir.

Néanmoins, des paramètres expérimentaux autres que la puissance laser ou la durée d'impulsion efficace ont aussi une influence, notamment la dilution du précurseur et dans une moindre mesure la pression du mélange et la vitesse de passage dans le réacteur. Il a été déterminé plusieurs jeux de paramètres permettant d'obtenir des quantités significatives de nanoparticules tout en restant dans la gamme de taille inférieure à 10 nm. Le tableau ci-après montre l'exemple de la synthèse de quatre lots différents ayant produit des nanoparticules avec des productions de 80 à 740 mg/heure pour des tailles allant de 4 à 9 nm.

| Poudre/ n° | %impulsion efficace | Période de tir (µs) | Puissance (W) | SiH4 (sccm) | He (sccm) | Temps de séjour (ms) | Production (g/h) | Taille (nm) |
|---|---|---|---|---|---|---|---|---|
| A | 43,75 | 160,00 | 800,00 | 50,00 | 1062,50 | 0,34 | 0,08 | 4,00 |
| B | 50,00 | 60,00 | 930,00 | 50,00 | 1062,50 | 0,34 | 0,08 | 5,00 |
| C | 62,50 | 160,00 | 1230,00 | 50,00 | 1250,00 | 0,29 | 0,27 | 7,61 |
| D | 75,00 | 160,00 | 1500,00 | 50,00 | 687,50 | 0,51 | 0,74 | 9,58 |

La figure 5 montre les spectres de photoluminescence enregistrés sous laser ultraviolet sur une poudre obtenue par la mise en œuvre du procédé. Le maximum (pic de photoluminescence) se déplace entre 740 et 800 nm, ce qui correspond à des tailles allant de 4,2 à 5,2 nm qui se déduisent d'un calcul basé sur la théorie du confinement quantique. On illustre ainsi la faible dispersion en taille des nanoparticules produites ici. Il convient de noter que la taille des particules a été mesurée en outre par microscopie électronique en transmission de haute résolution et par la méthode dite de « BET » (pour Brunauer, Emmet, Teller) et les valeurs des tailles de particules ont été confirmées.

Outre la gamme donnée ci-avant de durées d'impulsion efficace allant de 30 à 260 microsecondes,
- la gamme de puissance laser va de 500 watts environ à 2400 watts environ, avantageusement de 500 watts à 2000 watts environ,
- le pourcentage en durée d'impulsion efficace par tir laser est avantageusement dans une gamme de 40 à 100%,
- la dilution du précurseur dans le fluide de transport est préférentiellement dans une gamme de 1/30 à 1/10,
- la pression du mélange dans le réacteur est préférentiellement dans une gamme de 2,00 x 10⁴ Pa (ou 150 torr) à 4,00 x 10⁴ Pa (ou 300 torr), et
- la durée de séjour dans le réacteur est préférentiellement dans une gamme de 0,18 milliseconde (soit une vitesse de passage de 11 m/s dans le réacteur pour une tache d'impact laser de 2 millimètres) à 0,5 milliseconde (pour une vitesse de passage de 4 m/s).

Pour toutes ces plages de valeurs, des valeurs proches des limites basses (30 µs, 500 W, 40 %, 1/30, 2,00 x 10⁴ Pa (ou 150 torr), 0,18 ms) favorisent une faible taille des particules. En revanche, des valeurs proches des limites hautes (260 µs, 2000 W, 100 %, 1/10, 4,00 x 10⁴ Pa (ou 300 torr), 0,5 ms) favorisent la croissance des particules et plus particulièrement contribuent à augmenter la cadence de production. Cependant, il convient d'indiquer que si le choix des paramètres est fait uniquement ou principalement près des limites basses, il ne se crée simplement pas de flamme de réaction et donc aucune particule n'est produite. A l'inverse, si le choix de tous les paramètres s'effectue près des limites hautes, des nanoparticules de taille bien supérieure à 10 nm sont produites. Ainsi, l'obtention de nanoparticules de taille inférieure à 10 nm est le résultat d'un compromis entre les différents paramètres de synthèse. Typiquement, une même taille de particule peut être obtenue avec plusieurs jeux de paramètres expérimentaux différents.

Les critères permettant d'obtenir des nanoparticules de taille inférieure à 10 nm et en quantité pondérable sont néanmoins précisés ci-après.

En choisissant une dilution inférieure à 1/20 (donc dans la gamme 1/30-1/20) et une puissance laser relativement faible (500-700 W), le pourcentage de durée d'impulsion efficace est préférentiellement de 100% (fonctionnement du laser en mode continu) et préférentiellement la pression dans le réacteur est relativement élevée (3,33 x 10⁴ Pa-4,00 x 10⁴ Pa (ou 250-300 torr)).

En choisissant une dilution inférieure à 1/20 mais une puissance laser moyenne (de l'ordre de 800 à 1000 W), le pourcentage de durée d'impulsion efficace est préférentiellement de l'ordre de 40 à 55% et la pression plutôt de l'ordre de 2,00 x 10⁴ Pa-3,33 x 10⁴ Pa (ou 150-250 torr). Ainsi pour obtenir des particules d'un diamètre d'environ 5 nm (rouge) avec une production horaire d'une centaine de milligrammes par heure il est possible de fixer la durée d'impulsion à 40-45%, la pression à 2,00 x 10⁴ Pa (ou 150 torr) et la puissance du laser à 800-900 W.

En choisissant une dilution inférieure à 1/20 et une puissance laser élevée (supérieure à 1000 W), le pourcentage de durée d'impulsion efficace est préférentiellement de l'ordre de 60-75%, la puissance et la durée d'impulsion efficace étant donc augmentées. On diminue aussi la pression dans le réacteur dans la gamme de 2,00 x 10⁴ Pa à 2,67 x 10⁴ Pa (ou 150 à 200 torr). Ainsi pour obtenir des particules d'un diamètre d'environ 5 nm (rouge) avec une production horaire de 150 mg/h il est possible de fixer la durée d'impulsion à 65%, la pression à 2,00 x 10⁴ Pa (ou 150 torr) et la puissance du laser à 1500 W.

En choisissant une dilution égale ou supérieure à 1/20 (plus proche de 1/10), le pourcentage de durée d'impulsion efficace est préférentiellement de l'ordre de 75% mais avec une puissance laser élevée (jusque de l'ordre de 1500 W), en restant dans une gamme de pression faible (2,00 x 10⁴ Pa-2,67 x 10⁴ Pa (ou 150-200 torr)).

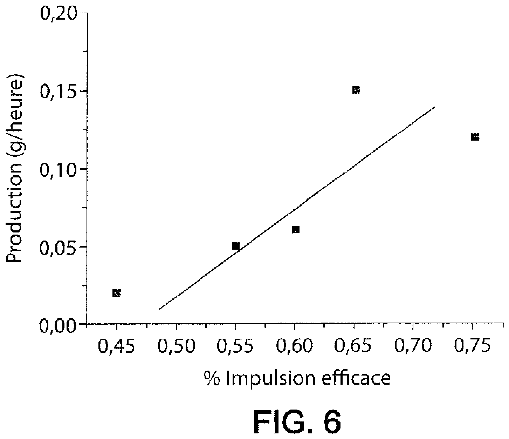

Pour illustrer toutefois l'influence certaine du pourcentage en durée d'impulsion efficace sur la production, on a représenté sur la figure 6 une variation de la production en fonction de ce pourcentage, à autres paramètres expérimentaux sensiblement constants (ou au moins dans de mêmes plages de valeurs). Il apparaît nettement la tendance générale de croissance de la production horaire (ici jusqu'à environ 200 milligrammes par heure) en fonction du pourcentage de durée d'impulsion efficace.

L'installation de pyrolyse laser selon la présente invention pour la synthèse de nanoparticules de silicium comprend de préférence :
- une source laser réglable au moins en puissance et en durée d'impulsion efficace,
- système régulateur de débit massique comportant un jeu de vannes et de manomètre pour contrôler la dilution de précurseur dans le fluide de transport et/ou la pression dans le réacteur et/ou la vitesse de passage dans le réacteur (à travers le débit de fluide de transport),
- des moyens de focalisation FOC du rayonnement laser pour produire une zone d'interaction (tache de focalisation) dans le réacteur REAC d'environ 2 millimètres de diamètre,
- un système de trempe par injection de gaz à froid juste en aval de la zone de pyrolyse.
Dans des modes de réalisation de l'invention, on contrôle le taux de production des nanocristaux de silicium par le biais de la puissance de la source laser. Pour avoir un taux de production maximum, on utilisera préférentiellement un laser de puissance la plus grande possible. Avantageusement, ce contrôle par le biais de la puissance, s'effectue en optimisant la géométrie du faisceau laser afin d'augmenter le taux de production.

Avantageusement, ce contrôle par la puissance laser est accompagné d'un ajustement du flux d'entrée du mélange dans la chambre de réaction. En effet, outre l'influence sur le taux de production de nanocristaux, la puissance laser a un effet sur la taille des particules obtenues. Plus le précurseur est exposé à une puissance laser importante, plus les nanocristaux sont de taille importante.

Ainsi, pour obtenir un taux de production important pour une taille des nanocristaux donnée, par exemple de l'ordre de 200 mg/h pour des particules de 4 nm, on opte pour une puissance laser élevée et un flux d'entré du mélange dans la chambre de réaction également élevé. De cette manière, même si la puissance est importante, le précurseur passant un temps limité dans la zone d'interaction, les nanocristaux n'ont pas le temps de trop croître en taille.

On comprend donc que la puissance laser et le flux d'entrée du mélange dans la chambre de réaction sont des paramètres de contrôle de la taille des nanocristaux. La taille des nanocristaux est croissante avec la puissance de la source laser, et décroissante avec le flux d'entrée du mélange dans la chambre de réaction.

Un autre moyen de réaliser un contrôle de la taille des nanocristaux consiste à jouer sur la dilution du silane dans le mélange introduit dans la chambre de réaction. En effet, une faible dilution des particules de silane favorise les collisions, et donc, la croissance des nanocristaux. Ainsi, ce paramètre de dilution doit être pris en compte dans la production des nanocristaux. Une gamme optimale de dilution du silane, par exemple dans un mélange avec de l'hélium, se situe autour de 5% à 8%. Ces pourcentages sont basés sur les débits volumiques respectivement du silane et de l'hélium. Dans cette gamme, il est possible d'obtenir des particules assez fines. Pour contrôler la dilution, on peut, par exemple, mettre en œuvre les vannes d'ouverture et des débitmètres massiques.

En modifiant la dilution, par exemple en diminuant la quantité de silane introduite sans modifier la quantité d'hélium introduite, on modifie, par conséquent, le flux d'entrée du mélange dans la chambre de réaction. Cette modification de la dilution peut donc avoir un effet sur la taille des particules. Cependant, elle peut en outre avoir un effet sur la distribution des tailles des nanocristaux.

En effet, le mélange gazeux est introduit dans la chambre de réaction au moyen d'une buse, laquelle buse est entourée de moyens d'injection circulaires et concentriques d'un gaz de confinement autour du mélange gazeux.

Ce gaz de confinement, généralement de l'argon, a plusieurs fonctions. Premièrement, il permet de diriger le flux du mélange dans la chambre de réaction, par exemple évitant ainsi toute interaction des précurseurs avec les parois. Deuxièmement, le gaz de confinement permet d'uniformiser les vitesses de passage des particules de précurseur dans la zone de réaction.

En effet, à la sortie de la buse, toutes les particules de précurseur n'ont pas la même vitesse. Les particules de précurseur en périphérie, c'est-à-dire les plus proches des parois de la buse, sont ralenties par rapport à celles se trouvant au centre de l'écoulement. Ainsi, en injectant le gaz de confinement de manière concentrique autour du mélange, par un effet d'entrainement, les particules de précurseur en périphérie sont accélérées.

Ainsi, les vitesses de passage des particules de précurseurs sont homogènes, et elles réalisent un temps de passage homogène qui a pour conséquence une meilleure distribution de la taille des nanocristaux.

Si l'on modifie le flux d'entrée du mélange dans la chambre de réaction sans modifier en conséquence le flux d'entrée du gaz de confinement, on détériore la distribution des tailles des nanocristaux.

Ainsi, lorsque l'on modifie le débit d'entrée du mélange, on le fait également en conséquence pour le gaz de confinement. Par exemple, on garde un rapport constant entre ces deux débits.

Comme on l'aura compris, la zone de réaction se trouve sur le chemin du flux du mélange gazeux. Les particules de précurseur parcourent donc un certain trajet avant de rentrer dans cette zone. Ainsi, ce trajet peut avoir une influence sur la taille des nanocristaux. Par exemple, les particules de précurseur sont ralenties par rapport à leur vitesse de sortie de la buse. Ainsi, plus la zone de réaction est éloignée de la sortie de la buse, plus les nanocristaux obtenus peuvent être de tailles importantes.

On tient donc compte de cette distance, par exemple en contrôlant la direction de visée du dispositif de focalisation ou du laser.

Afin de garantir une bonne qualité de pyrolyse, on veille à obtenir une flamme plate pour les faibles taux de production, et une flamme à la fois allongée, large et symétrique pour les taux de production importants. Ces flammes, dans chacun des deux cas permettent une bonne pyrolyse.

De manière plus générale, on veille à garder une flamme homogène, c'est-à-dire avec une luminosité sensiblement constante. Une bonne homogénéité de la flamme permet de s'assurer que les particules de précurseur reçoivent toutes la même puissance de la source laser. On s'assure ainsi, d'une bonne distribution de la taille des nanocristaux produits.

On peut prévoir de contrôler la pression dans une conduite d'acheminement du mélange introduit dans la chambre de réaction. Ce contrôle peut se faire par rapport à une pression dans le mélange à une distance prédéterminée de la zone réaction. Par exemple une distance de trente centimètres. Ce contrôle peut également se faire par rapport à la pression dans la conduite d'acheminement du mélange (buse).

On peut également faire un contrôle de la pression régnant dans la chambre de réaction, ou encore contrôler la vitesse d'écoulement du mélange dans la zone de réaction.

La pression peut être ajustée dans une gamme assez large, on peut prévoir de descendre en dessous de 2,00 x 10⁴ Pa (ou 150 Torr), voire en dessous de 6,7 x 10³ Pa (ou 50 Torr). Cependant, on veille à garder une pression stable, c'est-à-dire relativement constante, durant une séquence de production afin de garantir une distribution fine de la taille des nanocristaux.

Un autre paramètre qu'il est avantageux de gérer pour contrôler la taille des nanocristaux est la valeur du rapport de la durée effective d'impulsion sur la période de tir laser. Une gamme avantageuse pour mener ce contrôle est comprise entre 0,2 et 0,4 environ.

Pour atteindre des taux de production importants, il est avantageux enfin de contrôler la puissance du rayonnement laser.

Dans une gamme de taille des nanocristaux s'étendant entre 3 et 4 nm, les taux de production obtenus peuvent aller jusqu'à 80mg/h, voire jusqu'à 200mg/h, de façon particulièrement avantageuse dans une forme de réalisation décrite plus loin.

Bien entendu, ces taux de production tiennent compte de la taille de nanocristaux. Par exemple, pour des nanocristaux de 10 nm, un taux de production satisfaisant se situe autour de 1000 mg/h.

Dans des modes de réalisation de l'invention, on contrôle l'étendue de la zone dans laquelle se déroule la réaction de pyrolyse. Plus précisément, on contrôle les dimensions de la tache du laser, notamment la répartition spatiale de la puissance lumineuse transférée au mélange introduit dans la chambre de réaction. La tache du laser est observée dans un plan orthogonal à la direction moyenne des rayons lumineux issus de la source laser, ou le cas échéant du dispositif de focalisation. Un bon résultat pour les dimensions de cette tâche dans le plan orthogonal à la direction moyenne des rayons lumineux, lorsque la direction de l'écoulement est parallèle au plan d'observation de la tâche, est par exemple de 0,5 mm selon la direction de l'écoulement du mélange introduit dans la chambre de réaction, et de 3mm selon une direction orthogonale à la direction de l'écoulement.

En effet, il est avantageux de veiller à recouvrir la largeur de l'écoulement, c'est-à-dire la dimension de l'écoulement selon une direction orthogonale à la direction de l'écoulement. Ainsi, toutes les particules de précurseur du mélange interagissent avec le faisceau laser. En adaptant la tache à la largeur de l'écoulement, on évite une tache laser trop étroite, ce qui laisserait passer des molécules de précurseur des bords du flux dans la chambre de réaction sans qu'elles subissent de pyrolyse. De cette manière, on évite également une tache trop étendue qui illuminerait une zone ne contenant pas de particule de précurseur et engendrerait donc une déperdition d'énergie surfacique inutile.

L'autre dimension de la tache peut être sa hauteur, c'est-à-dire sa dimension selon l'axe de l'écoulement. Cette dimension peut avoir un effet sur la taille des particules. En effet, plus la tache est étendue selon cette dimension, et plus les particules de précurseur interagiront avec le laser dans la chambre de réaction. Ainsi, pour obtenir des nanocristaux assez fins, on évite une extension trop importante de la tache selon la direction de l'écoulement.

La forme de la tache est idéalement rectangulaire. En effet, il est préférable d'obtenir un éclairement homogène sur le flux pour éviter que les particules, selon leur position dans le flux plus ou moins proche de la périphérie, ne parcourent pas la même distance dans la zone d'interaction avec le laser, et donc interagiront plus ou moins avec le faisceau, ce qui impacterait la distribution de la taille des nanocristaux.

En résumé, on produit une tache de la même largeur que l'écoulement du mélange tout en veillant à garder une hauteur constante. De cette manière, on augmente le taux de production, tout en maintenant une taille fine et équi-distribuée des nanocristaux.

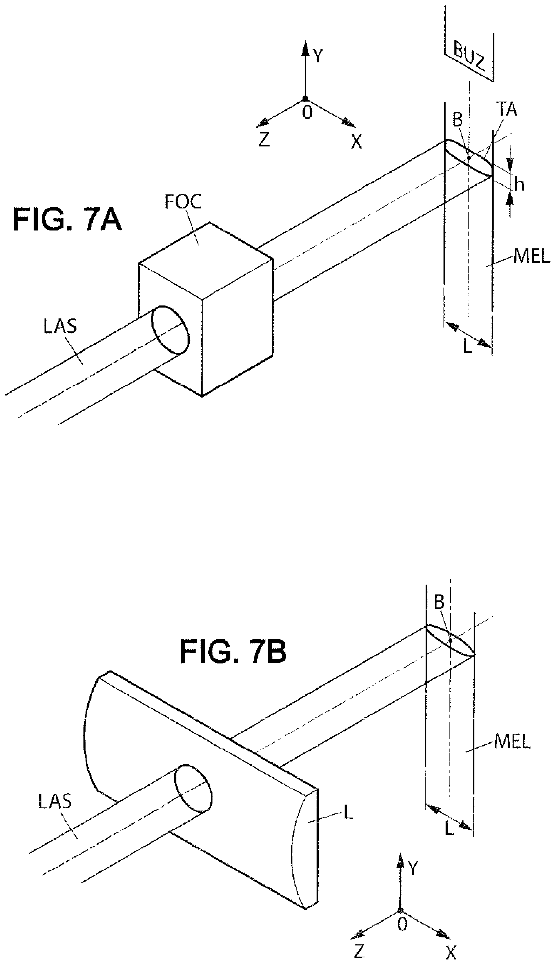

Pour contrôler les dimensions de la tache, on peut utiliser un dispositif de focalisation réglable FOC représenté sur la figure 7A. En référence à cette figure et au repère orthonormal (O, x, y, z) de cette figure, une lumière laser LAS, issue d'une source non représentée est dirigée selon un axe (Bz) en direction de l'écoulement MEL. Cet écoulement est issu d'une buse BUZ et est cylindrique, dirigé selon l'axe (By). Le point B est un point de l'écoulement. La tache TA est observée dans la plan (B, x, y).

Le dispositif de focalisation permet d'ajuster les dimensions de la tache selon les directions parallèles à (Bx) pour la largeur, et parallèles à (By) pour la hauteur. Cet ajustement peut être indépendant pour chacune des directions.

Ainsi, on règle le dispositif de sorte que la largeur L de la tache corresponde à celle de l'écoulement MEL. Comme on l'aura compris, la largeur de l'écoulement correspond dans cet exemple au diamètre de l'écoulement au point moyen d'interaction avec le laser.

On règle également le dispositif de sorte à ce que la hauteur h de la tache soit sensiblement constante.

En général, on règle le dispositif pour avoir une hauteur autour de 0,5 mm. Bien entendu, l'homme du métier veillera à faire ce réglage en tenant compte des problèmes liés à la diffraction et aux aberrations des rayons lumineux issus de la source laser qui peuvent survenir. Ces problèmes sont inhérents aux dispositifs optiques et l'homme du métier peut les corriger.

Bien entendu, selon le dispositif de focalisation utilisé, la tache peut avoir diverses formes (carré, rectangulaire, circulaire, elliptique, ou autre).

Par exemple, le dispositif de focalisation peut comprendre une ou plusieurs lentilles cylindriques ou semi-cylindriques. De telles lentilles permettent de focaliser une lumière incidente selon un segment de droite, de façon connue en soi.

Un exemple d'un tel dispositif comportant une seule lentille est représenté sur la figure 7B avec les mêmes notations que pour la figure 7A. Sur cette figure 7B, une lentille semi-cylindrique L a son axe d'invariance dirigé orthogonalement à la direction d'écoulement du mélange MEL. On entend par direction d'invariance, la direction selon laquelle la lentille ne modifie pas la lumière incidente. Pour une lentille en portion de cylindre de révolution, cet axe correspond à l'axe de révolution du cylindre.

Ainsi, en contrôlant la distance d'un plan de focalisation de cette lentille par rapport à la zone de réaction, on ajuste la largeur de la tache. Par exemple, on utilise une lentille de distance focale 500mm pour obtenir une tache sensiblement oblongue et de grande dimension selon l'axe (Bx) pouvant atteindre la largeur du flux du mélange réactif, par exemple 3mm.

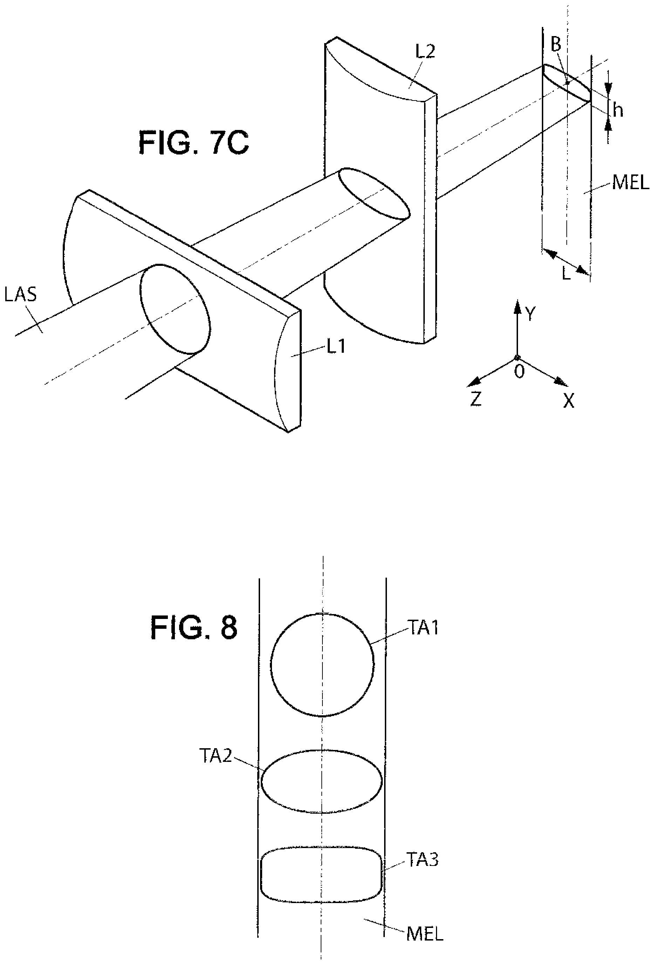

On peut envisager un dispositif de focalisation comportant deux lentilles cylindriques comme cela est illustré sur la figure 7C avec les mêmes notations que la figure 7A. Dans ce cas, on veille à ce que les directions d'invariance de chacune des lentilles L1 et L2 soient différentes. On entend par directions différentes, des directions portées par des vecteurs, par exemple dans un plan orthonormal, non colinéaires.

Ici, les axes d'invariance des lentilles sont orthogonaux, et l'axe d'invariance de la lentille L2 est parallèle à la direction de l'écoulement du mélange.

De cette manière, on obtient une tache possédant au moins deux grandeurs caractéristiques. En jouant indépendamment sur les distances de chacune des lentilles à la zone de réaction, on peut ajuster chacune des deux grandeurs caractéristiques.

Par exemple, sur le dispositif représenté sur la figure 7C, le laser produit une tache circulaire dans un plan orthogonal à la direction moyenne des rayons lumineux qui en sont issus. Après passage par la lentille L1, cette tache a une forme d'ellipse. Le grand axe de l'ellipse est parallèle à l'axe (Bx) car l'axe d'invariance de L1 est également parallèle à cet axe. Après le passage des rayons lumineux par la lentille L2, l'ellipse a été déformée selon un axe parallèle à (By) car l'axe d'invariance de la lentille L2 est également parallèle à cet axe.

Ainsi, au niveau de l'écoulement du mélange, dans le plan (B, x, y) on obtient une tache de dimensions caractéristiques L et h. Celles-ci étant mesurées sur une direction respectivement orthogonale à la direction d'écoulement du mélange et parallèle à la direction de l'écoulement. La tache est globalement rectangulaire avec des cotés sensiblement en arcs d'ellipse (en forme globale de « coussinet »), dans ce cas les grandeurs caractéristiques sont la longueur et la largeur du rectangle, lesquelles sont mesurées sur une direction respectivement orthogonale à la direction d'écoulement du mélange et parallèle à la direction de l'écoulement.

On comprend donc que par exemple, la disposition de la lentille L1 permet notamment de jouer sur le taux de production, et la lentille L2 notamment sur la taille des nanocristaux, et ce de manière indépendante.

Par exemple, L1 et L2 sont cylindriques et ont la même focale f. La distance entre L1 et l'axe (By) est ajustée à f. La distance entre L2 et l'axe de la buse est réglable et permet d'ajuster la grandeur L de la tache laser. La grandeur h de la tache est donnée, par exemple, par la limite de diffraction (0.45 mm à 10,6 µm avec une focale de 500 mm). On obtient alors un recouvrement satisfaisant du flux gazeux par le laser.

Le contrôle des dimensions de la tache permet, par exemple, d'adapter la surface d'éclairement à l'épaisseur de l'écoulement du mélange introduit dans la chambre de réaction, c'est-à-dire la dimension de l'écoulement dans un plan orthogonal à la direction moyenne des rayons issus du dispositif de focalisation et orthogonal à la direction de l'écoulement. Ainsi, on transfère une densité de puissance lumineuse maximale au mélange en minimisant les pertes.

Pour éviter les effets de bords, et garantir une bonne distribution de la taille des nanocristaux, on veillera à ne pas trop étendre la grandeur L. En effet, à la périphérie de l'écoulement, c'est-à-dire à proximité de l'écoulement du gaz de confinement, comme déjà évoqué plus haut, les molécules de précurseur n'ont pas tout à fait la même vitesse que celles qui sont plus proches de l'axe moyen d'écoulement.

Cette géométrie avantageuse de la zone d'interaction est donc obtenue par une modification des paramètres de focalisation. Celle-ci permet d'améliorer la production de nanocristaux tout en diminuant leur taille.

Ce résultat a été obtenu en mettant en œuvre des moyens de focalisation du laser qui utilisent une ou deux lentilles cylindriques, et dans lequel, dans le cas de deux lentilles, les plans de focalisation sont croisés de manière à ajuster les dimensions verticales et horizontales de la tache au niveau de la zone de réaction de façon indépendante, en jouant alors sur la distance de chaque lentille par rapport à la zone de réaction. Le meilleur résultat a été obtenu pour une tache de 0.5 mm en hauteur et de 3 mm en largeur (mesurée expérimentalement) pour les conditions d'acheminement du flux du mélange réactif décrites précédemment.

La cadence de production a pu passer ainsi de 80 mg/heure pour des nanocristaux de 4 nm de diamètre à plus de 200 mg/heure pour des nanocristaux dans la gamme 3-4 nm.

La figure 8 illustre différentes formes de tache pour un même écoulement. Cette figure permet de comparer les effets de la forme de la tache sur les performances de production. La première tache TA1 est circulaire mais ne couvre pas les bords latéraux du flux réactif. Ainsi, avec un écoulement plus large que ce diamètre, on n'obtient pas un taux de production optimal car des particules de précurseur de mélange passent de part et d'autre de la tache.

La tache TA2 est elliptique. Elle peut par exemple être obtenue par déformation d'une tache circulaire avec une lentille semi-cylindrique L1 (Figure 7B). Ainsi, avec une hauteur donnée (selon la direction d'écoulement du mélange) on peut couvrir toute la largeur de l'écoulement (selon une direction orthogonale à celui de l'écoulement). De cette manière, on augmente le taux de production.

La tache TA3 est rectangulaire. Elle peut par exemple être obtenue par déformation de la tache elliptique TA2, par ajout d'une deuxième lentille semi-cylindrique L2, comme décrit ci-avant en référence à la figure 7C. Ainsi, la tache a une hauteur sensiblement constante et les particules traversant la zone de réaction interagissent sensiblement de la même manière avec le faisceau, ce qui améliore la distribution de la taille des nanocristaux.

## Revendications

1. Installation de synthèse par pyrolyse laser de nanoparticules comportant du silicium, dans laquelle un précurseur comportant l'élément silicium est acheminé par un fluide de transport vers un réacteur de pyrolyse pour recevoir un rayonnement laser,
ladite installation comportant :
- une source laser réglable au moins en puissance,
- un jeu de vannes pour contrôler la dilution du précurseur dans le fluide de transport, et
- des moyens adaptés pour :
• acheminer, par le fluide de transport, le précurseur comportant l'élément silicium, vers le réacteur de pyrolyse,
• appliquer, dans le réacteur, un rayonnement laser à un mélange que forment le fluide de transport et le précurseur,
• récupérer en sortie du réacteur des nanoparticules comportant du silicium.

2. Installation selon la revendication 1, **caractérisée en ce que** la source laser est en outre réglable en durée d'impulsion effective dans une période de tir laser.

3. Installation selon la revendication 1, **caractérisée en ce que** la puissance laser est supérieure ou de l'ordre de 500 watts.

4. Installation selon l'une des revendications précédentes, **caractérisée en ce que** la puissance du rayonnement laser est comprise entre environ 500 watts et environ 2400 watts.

5. Installation selon l'une des revendications précédentes, **caractérisée en ce qu'**elle comporte en outre des moyens de focalisation du rayonnement laser sur le réacteur adaptés pour focaliser le rayonnement laser sur une tâche de quelques millimètres de diamètre dans le réacteur.

6. Installation selon la revendication 5, **caractérisée en ce que** les moyens de focalisation permettent une focalisation du rayonnement laser sur une tâche, et **en ce qu'**ils sont adaptés pour contrôler en hauteur et/ou en largeur les dimensions de la tâche.

7. Installation selon l'une des revendications précédentes, **caractérisée en ce que** le fluide de transport, au moins, est sous forme gazeuse dans le réacteur, ladite installation comportant en outre au moins un manomètre de contrôle de la pression du fluide de transport, au moins, pour opérer à basse pression dans le réacteur.

8. Installation selon la revendication 7, le précurseur étant du silane sous forme gazeuse, **caractérisée en ce que** l'au moins un manomètre de contrôle de la pression du fluide de transport est adapté pour que la pression du mélange que forment le fluide de transport et le précurseur dans le réacteur soit comprise entre environ 5,3x10³ Pa, ou 40 torr, et environ 4,00 x 10⁴ Pa, ou 300 torr.

9. Installation selon l'une des revendications précédentes, **caractérisée en ce qu'**elle comporte en outre un jeu de vannes pour contrôler la vitesse d'injection dans le réacteur pour opérer dans une gamme de vitesse d'injection dans le réacteur comprise entre environ 4 à environ 11 mètres par seconde.

10. Installation selon l'une des revendications précédentes, **caractérisée en ce qu'**elle comporte en outre un système de trempe par injection de gaz à froid après la pyrolyse pour appliquer une trempe des nanoparticules par un gaz froid après la pyrolyse.

11. Installation selon l'une des revendications précédentes, **caractérisée en ce que** la source laser est contrôlable en outre en fréquence de tirs laser.

## Patentansprüche

1. Anlage zur Synthese von siliciumhaltigen Nanopartikeln durch Laserpyrolyse, wobei eine Vorläufersubstanz, die das Element Silicium enthält, mittels eines Förderfluids zu einem Pyrolysereaktor befördert wird, um eine Laserstrahlung zu erhalten, wobei die Anlage Folgendes umfasst:
- eine Laserquelle, die zumindest bezüglich der Leistung steuerbar ist,
- einen Satz von Ventilen zum Steuern der Verdünnung der Vorläufersubstanz in dem Förderfluid und
- Mittel zum:
• Befördern, mittels des Förderfluids, der Vorläufersubstanz, die das Element Silicium enthält, zum Pyrolysereaktor,
• Anwenden, in dem Reaktor, einer Laserstrahlung auf eine Mischung, welche das Förderfluid und die Vorläufersubstanz bilden,
• Gewinnen, ausgangsseitig des Reaktors, der siliciumhaltigen Nanopartikel.

2. Anlage nach Anspruch 1, **dadurch gekennzeichnet, dass** die Laserquelle darüber hinaus hinsichtlich der wirksamen Impulsdauer in einem Laserbeschusszeitraum steuerbar ist.

3. Anlage nach Anspruch 1, **dadurch gekennzeichnet, dass** die Laserleistung höher als oder in der Größenordnung von 500 Watt liegt.

4. Anlage nach einem der vorhergehenden Ansprüche, **dadurch gekennzeichnet, dass** die Leistung der Laserstrahlung im Bereich von ungefähr 500 Watt bis ungefähr 2400 Watt liegt.

5. Anlage nach einem der vorhergehenden Ansprüche, **dadurch gekennzeichnet, dass** sie darüber hinaus Mittel zur Fokussierung der Laserstrahlung am Reaktor umfasst, damit die Laserstrahlung innerhalb des Reaktors auf einen Fleck mit einem Durchmesser von einigen Millimetern fokussiert werden kann.

6. Anlage nach Anspruch 5, **dadurch gekennzeichnet, dass** die Mittel zur Fokussierung eine Fokussierung der Laserstrahlung auf einen Fleck gestatten, und dadurch, dass sie die Abmessungen des Flecks bezüglich der Höhe und/oder der Breite steuern können.

7. Anlage nach einem der vorhergehenden Ansprüche, **dadurch gekennzeichnet, dass** das Förderfluid zumindest innerhalb des Reaktors gasförmig vorliegt, wobei die Anlage darüber hinaus mindestens ein Manometer zur Steuerung des Drucks des Förderfluids umfasst, damit zumindest der Betrieb innerhalb des Reaktors bei Niederdruck erfolgt.

8. Anlage nach Anspruch 7, wobei es sich bei der Vorläufersubstanz um Silan handelt, das gasförmig vorliegt, **dadurch gekennzeichnet, dass** das mindestens eine Manometer zur Steuerung des Drucks des Förderfluids den Druck derart steuert, dass der Druck der Mischung, welche aus dem Förderfluid und der Vorläufersubstanz gebildet ist, innerhalb des Reaktors im Bereich von ungefähr 5,3 x 10³ Pa oder 40 Torr bis ungefähr 4,00 x 10⁴ Pa oder 300 Torr liegt.

9. Anlage nach einem der vorhergehenden Ansprüche, **dadurch gekennzeichnet, dass** sie darüber hinaus einen Satz von Ventilen zum Steuern der Einleitgeschwindigkeit in den Reaktor umfasst, damit der Betrieb derart erfolgt, dass der Geschwindigkeitswertebereich des Einleitens in den Reaktor im Bereich von ungefähr 4 bis ungefähr 11 Metern pro Sekunde liegt.

10. Anlage nach einem der vorhergehenden Ansprüche, **dadurch gekennzeichnet, dass** sie darüber hinaus ein Härtungssystem durch Einleiten von Kaltgas nach der Pyrolyse umfasst, damit die Nanopartikel nach der Pyrolyse durch ein Kaltgas gehärtet werden.

11. Anlage nach einem der vorhergehenden Ansprüche, **dadurch gekennzeichnet, dass** die Laserquelle darüber hinaus bezüglich der Frequenz des Laserbeschusses gesteuert werden kann.

## Claims

1. A facility for synthesizing silicon-containing nanoparticles by laser pyrolysis, wherein a precursor containing silicon is conveyed by a carrier fluid to a pyrolysis reactor in order to receive a laser radiation, said facility including:
- a laser source having at least an adjusted power,
- a set of valves for controlling the dilution of the precursor in the carrier fluid, and
- means suitable for:
• conveying, by the carrier fluid, the precursor containing silicon to the pyrolysis reactor;
• applying, in the reactor, laser radiation to a mixture containing the carrier fluid and the precursor;
• recovering, at an outlet of the reactor, silicon-containing nanoparticles.

2. The facility according to claim 1, **characterized in that** the effective pulse duration in a laser firing period of the laser source is further controllable.

3. The facility according to claim 1, **characterized in that** the laser power is about 500 watts or higher.

4. The facility according to one of the previous claims, **characterized in that** the power of the laser radiation is between about 500 watts and about 2400 watts.

5. The facility according to one of the previous claims, **characterized in that** it further includes focusing means for focusing the laser radiation onto the reactor and suitable for focusing the laser radiation onto a spot of a few millimeters in diameter of the reactor.

6. The facility according to claim 5, **characterized in that** the focusing means allow the laser radiation to be focused onto a spot, and **in that** they are suitable for controlling the height and/or width dimensions of the spot.

7. The facility according to one of the previous claims, **characterized in that** the carrier fluid, at least, is in gaseous form in the reactor, said facility further including at least one pressure gauge for controlling the pressure of the carrier fluid, at least, in order to operate at low pressure in the reactor.

8. The facility according to claim 7, the precurseur being silane in faseous form, **characterized in that** the at least one pressure gauge for controlling the pressure of the carrier fluid is adapted so that the pressure of the mixture containing the carrier fluid and the precursor in the reactor is between about 5.3×10³ Pa, or 40 torr, and about 4.00×10⁴ Pa, or 300 torr.

9. The facility according to one of the previous claims, **characterized in that** it further includes a set of valves for controlling a rate of injection into the reactor so as to operate within a range of rate of injection into the reactor between about 4 and about 11 meters per second.

10. The facility according to one of the previous claims, **characterized in that** it further includes a quenching system, by injecting a cold gas after the pyrolysis, to apply a quench to the nanoparticles by a cold gas after the pyrolysis .

11. The facility according to one of the previous claims, **characterized in that** the laser firing frequency of the laser radiation of the laser source is further controllable.
